# EUROPÄISCHE PATENTSCHRIFT

(11) **EP 2 564 683 B1**
(45) Veröffentlichungstag und Bekanntmachung des Hinweises auf die Patenterteilung: **26.04.2017**
(21) Anmeldenummer: 12171427.3
(22) Anmeldetag: 11.06.2012
(51) Int. Cl.: A01D 43/073, A01D 43/08

(54) **System zur Steuerung einer Überladeeinrichtung**
System for controlling an overload device
Système de commande d'un dispositif de chargement

(30) Priorität: 31.08.2011 DE 102011053163
(43) Veröffentlichungstag der Anmeldung: 06.03.2013
(73) Patentinhaber: CLAAS Selbstfahrende Erntemaschinen GmbH, 33428 Harsewinkel (DE)
(72) Erfinder: Hartmann, Ralf, 49324 Melle (DE)

(56) Entgegenhaltungen:
- EP-A1- 2 100 495
- EP-A1- 2 138 027
- EP-A2- 1 040 745

## Beschreibung

Die Erfindung betrifft ein System zur Steuerung einer Überladeeinrichtung einer landwirtschaftlichen Erntemaschine gemäß dem Oberbegriff des Patentanspruchs 1. Ein solches System ist aus EP 2100495 bekannt. Landwirtschaftliche Erntemaschinen wie insbesondere selbstfahrende Feldhäcksler werfen während der Erntefahrt über ein Feld kontinuierlich Erntegut durch eine auch als Auswurfkrümmer bezeichnete Überladeeinrichtung auf ein mit einem Ladebehälter ausgestattetes, mitfahrendes Transportfahrzeug aus. Da die mit Feldhäckslern erzielbaren Erntegutdurchsätze und auch realisierten Fahrgeschwindigkeiten auf dem Feld stetig ansteigen, besteht in der Gewährleistung einer zuverlässigen und komfortablen Erntegutüberladung eine große Herausforderung.

Um den Überladevorgang bei unterschiedlichen Erntebedingungen und Verladesituationen zu ermöglichen, verfügen selbstfahrende Feldhäcksler über eine Überladeeinrichtung, die in der Regel um eine vertikale Achse und um eine horizontale Achse verschwenkbar gegenüber dem Maschinenrahmen gelagert ist. Die Überladeeinrichtung lässt sich beispielsweise mittels eines Drehkranzes um die vertikale Drehachse drehen (seitliche Verstellung) und beispielsweise mittels eines Hubzylinders um die horizontale Achse heben bzw. senken (Höhenverstellung). Durch die Überladeeinrichtung in Form eines Gutstrahls ausgeworfenes Erntegut lässt sich bereits durch diese beiden Maßnahmen in dessen Auswurfrichtung beeinflussen, um einen resultierenden Auftreffpunkt des Erntegutstrahls zu steuern.

Bei der beschriebenen seitlichen bzw. höhenmäßigen Verstellung wird jeweils die gesamte Überladeeinrichtung bewegt, um den Erntegutstrahl zu lenken. Diese Art der Verstellung ist daher trägheitsbedingt verhältnismäßig langsam in der Reaktion. Seit Jahren verfügen Überladeeinrichtungen daher zusätzlich über eine am maschinenabgewandten Ende angeordnete Gutlenkeinrichtung, eine sogenannte Auswurfklappe, die den Erntegutstrahl unmittelbar vor dem Austritt aus der Überladeeinrichtung lenkt. Die Klappe ist mittels eines Aktors, beispielsweise eines hydraulischen Stellzylinders, in der Höhe (um eine oder mehrere horizontale Achsen) verschwenkbar. Wegen der geringen mitbewegten Masse ermöglicht die Auswurfklappe eine Beeinflussung der Auswurfrichtung des Ernteguts bei kurzer Reaktionszeit und geringem Stellkraftaufwand.

Im praktischen Einsatz bei der Erntefahrt besteht der Nachteil, dass sich ein gewünschter Auftreffpunkt des Ernteguts nur im Nahbereich des Feldhäckslers präzise ansteuern lässt. Ist die Auswurfklappe bei zugleich angehobener Überladeeinrichtung - zum Überladen auf einen weit entfernten Ladebehälter - weit geöffnet, so führt eine nur geringfügige Änderung des Klappenwinkels zu einer großen Änderung der erzielten Wurfweite des Ernteguts. Eine Verstellung des Klappenwinkels führt in diesem Fall sehr schnell zu Erntegutverlusten, da sich der Auftreffpunkt des Ernteguts schon bei kleiner Klappenverstellung um viele Meter verschiebt und dann möglicherweise nicht mehr auf dem Ladebehälter liegt. Die unpräzise Verstellung führt also auch zu Übersteuerungen, die wiederum durch entsprechende (ebenfalls ungenaue) Gegenmaßnahmen, d.h. Gegensteuern, korrigiert werden müssen. Sowohl bei manueller als auch bei automatisierter Betätigung der Klappenstellung sind derartige Übersteuerungen störend.

Eine vergleichbare Problematik besteht auch bei der Verschwenkung der (gesamten) Überladeeinrichtung um die vertikale und/oder horizontale Achse, da auch hierbei die Ansteuerung eines gewünschten Auftreffpunkts mit zunehmendem Überladeabstand schwieriger, weil ungenauer wird.

Es ist daher eine Aufgabe der vorliegenden Erfindung, ein System zur Steuerung einer Überladeeinrichtung der eingangs genannten Art anzugeben, mit dem sich der Erntegutstrahl präziser steuern lässt, um insbesondere im Fernbereich eine genauere Ansteuerung eines gewünschten Auftreffpunkts zu gewährleisten.

Die genannte Aufgabe wird gelöst durch ein System mit dem Merkmalen des Anspruchs 1. Das erfindungsgemäße System zeichnet sich demnach aus durch Mittel zur Veränderung der Stellgeschwindigkeit des Stellorgans in Abhängigkeit der erzielten Wurfweite.

Der erfindungsgemäßen Lösung liegt zunächst die Erkenntnis zugrunde, dass sich mit einer Überladeeinrichtung, die Erntegut mit einer - durch zumindest ein Stellorgan - veränderlichen Auswurfrichtung auswirft, eine umso ungenauere Ansteuerung eines gewünschten Zielpunktes ergibt, je weiter das Erntegut ausgeworfen wird, d.h. je größer die erzielte Wurfweite ist. Die Ursache hierfür liegt in der geometrischen und kinematischen Struktur der Überladeeinrichtung, die herkömmlicher Weise dazu führt, dass sich die Verstellung eines einzelnen Stellorgans, wie beispielsweise der Auswurfklappe (und/oder eines Seitenstellmotors zur Drehung der Überladeeinrichtung und/oder eines Höhenstellzylinders zur Höhenverstellung der Überladeeinrichtung), mit zunehmender Wurfweite immer stärker auf die Verlagerung des Auftreffpunktes des Ernteguts auswi rkt.

Die erfindungsgemäße Lösung sieht eine Kompensationsmöglichkeit für diesen Effekt vor, indem Mittel vorgesehen sind, mit denen die Stellgeschwindigkeit des Stellorgans so verändert wird, dass das Stellorgan mit einer an die Wurfweite angepassten Stellgeschwindigkeit bewegt wird. Die Anpassung erfolgt dabei bevorzugt dynamisch (im laufenden Betrieb), berücksichtigt also veränderte Überladebedingungen unmittelbar. Praktisch wird damit eine angepasste Reaktion auf eine Ansteuerung realisiert, indem die Auswurfrichtung des Ernteguts in Abhängigkeit von der jeweiligen Wurfweite mit unterschiedlicher Intensität (Verstellgeschwindigkeit) veränderbar ist. Unter der Wurfweite sei dabei die Entfernung zwischen dem Ansatz der Überladeeinrichtung am Rahmen der Erntemaschine und dem erzielten Auftreffpunkt, beispielsweise auf einem Ladebehälter, verstanden. Das erfindungsgemäße Steuersystem kann beispielsweise ermöglichen, dass bei großen Wurfweiten ein gewünschter Auftreffpunkt des Ernteguts mit vergleichbarer Genauigkeit angefahren werden kann, wie bei kleinen Wurfweiten. Insbesondere bei manueller Betätigung des Stellorgans liefert das System so einen deutlich höheren Bedienkomfort für den Benutzer. Aufgrund der erhöhten Qualität der Ansteuerung können Erntegutverluste wirksam vermieden werden. Weiterhin werden Übersteuerungen - seien diese manuell oder im Rahmen einer automatischen Regelung verursacht - vermieden. Die genannte Aufgabe wird damit gelöst.

Die Wurfweite kann mit denkbaren für sich bekannten Einrichtungen erfasst werden. Zweckmäßigerweise ist eine solche Einrichtung mit einer Steuereinheit gekoppelt, die betreibbar ist, die Geschwindigkeit des Stellorgans in Abhängigkeit der erfassten Wurfweite zu verändern. Dazu gibt die Steuereinheit beispielsweise ein entsprechendes Steuersignal an das Stellorgan, so dass dieses mit veränderter Geschwindigkeit betrieben wird.

Die Einrichtung zur Erfassung der Wurfweite kann nach unterschiedlichen Prinzipien arbeiten. Gemäß einer denkbaren Ausführung greift diese zu auf bekannte Maschinenparameter, beispielsweise auf die Stellung der Überladeeinrichtung (erfassbar u.a. durch Drehpotentiometer zur Erkennung von Krümmerhöhe, Krümmerdrehung, Klappenstellung), die Auswurfbeschleunigung des Ernteguts (Drehzahl und/ Spaltweite des Nachbeschleunigers, Häckseldrehzahl etc.), und/oder auf Parameter des Ernteguts (Feuchte, Gutart etc.), um anhand dessen die erzielte Wurfweite auf indirektem Wege zu errechnen.

Gemäß einer bevorzugten Weiterbildung des Steuerungssystems weist die Einrichtung zur Erfassung der Wurfweite zumindest einen optischen Sensor auf, der zur Erfassung des Auftreffpunkts des Ernteguts dient. Hierbei handelt es sich bevorzugt um eine Kameraanordnung, die geeignet angeordnet und ausgerichtet ist, den Auftreffpunkt des Erntegutstrahls optisch zu erfassen. Anhand einer für sich bekannten Auswertung der Kamerabilder ist es möglich, daraus die Wurfweite abzuleiten. Die Kameraanordnung kann beispielsweise an der Erntemaschine selbst und/oder an der Überladeeinrichtung und/oder am Ladebehälter angeordnet sein. Zur Ableitung von Entfernungsinformationen aus den erfassten Bildern kommt bevorzugt eine Stereokamera zum Einsatz.

Bei der Steuereinheit handelt es sich vorzugsweise um einen elektronisch arbeitenden Signalprozessor, der eingehende Signale mit hoher Abtastrate auswerten und verarbeiten kann, um eine zeitnahe Ansteuerung des zumindest einen Stellorgans durchzuführen. Gemäß einer bevorzugten Ausführung ist die Steuereinheit betreibbar, die Geschwindigkeit des Stellorgans mit zunehmender Wurfweite zu verringern und mit abnehmender Wurfweite zu erhöhen. Durch eine solche Art der Anpassung der Stellgeschwindigkeit des Stellorgans wird vorteilhaft auch bei großen Wurfweiten eine präzise Lenkung des Ernteguts ermöglicht. Dies trägt vorteilhaft dazu bei, dass Übersteuerungen vermieden werden.

Eine bevorzugte Weiterbildung des erfindungsgemäßen Systems sieht vor, dass dem Stellorgan ein Aktor mit kontinuierlich veränderbarer Verstellgeschwindigkeit zugeordnet ist. So lässt sich vorteilhaft eine für die jeweilige Wurfweite geeignete Verstellgeschwindigkeit einstellen und laufend stufenlos anpassen. Bevorzugt liefert die Steuereinheit entsprechende Stellsignale an den Aktor. Verschiedene Arten von Aktoren sind denkbar, die sich mit kontinuierlich veränderbarer Geschwindigkeit betätigen lassen. Bevorzugt handelt es sich dabei um einen hydraulisch arbeitenden Aktor.

Die Ansteuerung des Stellorgans kann auf unterschiedliche Weise erfolgen. Gemäß einer bevorzugten Ausführung des erfindungsgemäßen Systems ist die Steuereinheit betreibbar, die Geschwindigkeit des Stellorgans stets so anzupassen, dass sich durch Betätigung des Stellorgans ein Auftreffpunkt des Ernteguts mit gleichbleibender Geschwindigkeit verlagern lässt. Eine solche Art der Ansteuerung bietet insbesondere bei manueller Betätigung des Stellorgans durch einen Bediener einen hohen Bedienkomfort, da der Bediener damit die Bewegung des Auftreffpunkts ganz unabhängig von der jeweiligen Wurfweite stets mit gleicher effektiver Geschwindigkeit steuert. Für den Bediener ergibt sich dadurch eine hohe Bediensicherheit, die insbesondere bei wechselnden Wurfweiten zur Vereinfachung des Überladevorgangs beiträgt.

In vorteilhafter Weiterbildung kann weiterhin der Steuereinheit eine Bedieneinrichtung zugeordnet sein, mittels welcher die Geschwindigkeit für die Verlagerung des Auftreffpunkts vorgebbar ist. Auf diese Weise ließe sich die Reaktionsempfindlichkeit bei der Ansteuerung vom Bediener vorwählen, so dass dieser beispielsweise abhängig vom Erfahrungsgrad oder abhängig von der Größe des zu befüllenden Ladebehälters eine gewünschte Geschwindigkeit für die Verlagerung des Auftreffpunkts vorwählt. Die Bedieneinrichtung kann dazu beispielsweise ein Stellrad, mehrere Auswahltasten oder dergleichen aufweisen.

Wie bereits eingangs erwähnt, lässt sich das Prinzip der erfindungsgemäß vorgesehenen wurfweitenabhängigen Anpassung der Stellgeschwindigkeit auf unterschiedliche Stellorgane einer Überladeeinrichtung anwenden, welche die Auswurfrichtung des Ernteguts beeinflussen. Es sei angemerkt, dass die vorteilhaften Effekte für ein einzelnes Stellorgan oder für mehrerer Stellorgane (kombiniert miteinander) erzielbar sind.

Gemäß einer vorteilhaften Weiterbildung der Erfindung handelt es sich bei dem zumindest einen Stellorgan um eine mittels eines Aktors bewegliche Auswurfklappe, mittels welcher sich ein Auswurfwinkel des austretenden Ernteguts gegenüber der Horizontalebene beeinflussen lässt.

Alternativ oder ergänzend ist die Überladeeinrichtung um eine vertikale Achse und/oder um eine horizontale Achse schwenkbar gegenüber einem Rahmen der Erntemaschine gelagert, wobei zur jeweiligen Verschwenkung der Überladeeinrichtung ein Aktor dient, der bzw. die als Stellorgane im Sinne der Erfindung anzusehen sein könnten, da auch diese die Auswurfrichtung des Ernteguts beeinflussen.

Das Grundprinzip der Erfindung ist anwendbar auf verschiedene Arten der Betätigung des Stellorgans. Vorteilhafte Effekte werden erzielt, wenn das Stellorgan mittels einer Bedieneinrichtung manuell, d.h. von einem Bediener, betätigbar ist. In diesem Fall sorgt das erfindungsgemäße System durch die angepasste Verstellgeschwindigkeit des Stellorgans an die jeweilige Wurfweite insbesondere für eine erleichterte Bedienung und eine Entlastung des Bedieners.

Daneben lässt sich das System vorteilhaft anwenden, wenn das Stellorgan im Rahmen einer automatisiert ablaufenden Erntegutstrahl-Positionierungsregelung betätigbar ist. In diesem Fall sorgt das System insbesondere dafür, dass aufgrund der präziseren Bewegung des Auftreffpunkts im Fernbereich Übersteuerungen vermieden werden, die zu nachteiligen Gegensteuermaßnahmen, zu einem Aufschaukeln und letztlich zur Instabilität des Regelsystems führen können.

Die Erfindung wird im Folgenden unter Hinweis auf die beigefügten Figuren näher erläutert. Daraus ergeben sich auch weitere Einzelheiten und Vorteile der Erfindung. Es zeigen:
- Fig. 1: eine schematische Seitenansicht eines selbstfahrenden Feldhäckslers,
- Fig. 2: eine schematische Seitenansicht einer Überladeeinrichtung beim Auswurf von Erntegut bei verschiedenen Stellungen der Auswurfklappe,
- Fig. 3: eine schematische Draufsicht eines Feldhäckslers beim Auswurf von Erntegut bei verschiedenen Drehstellungen der Überladeeinrichtung.

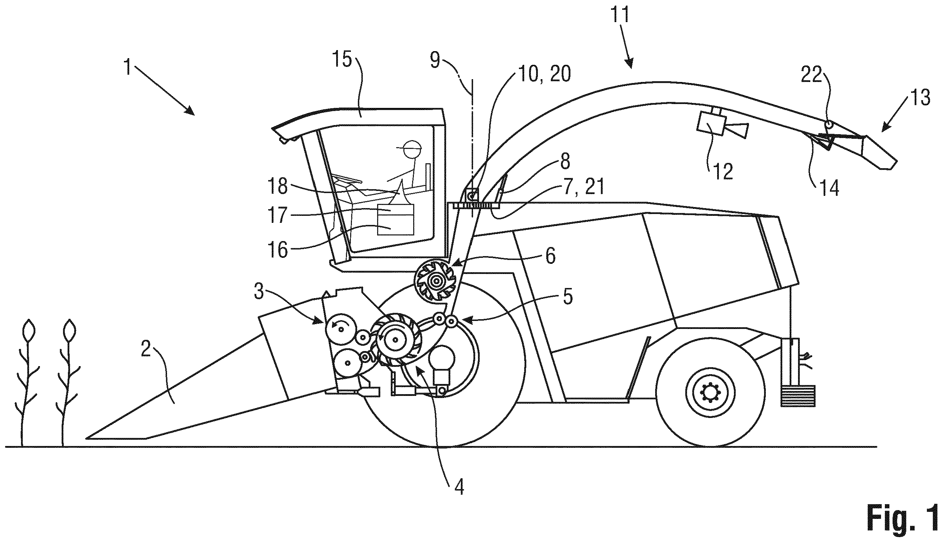

Fig. 1 zeigt eine landwirtschaftliche Erntemaschine in Form eines selbstfahrenden Feldhäckslers 1 in schematischer Seitenansicht. Der Feldhäcksler 1 ist mit einem erfindungsgemäßen System zur Steuerung einer Überladeeinrichtung ausgestattet.

Wie bildlich angedeutet, eignet sich der Feldhäcksler 1 dazu, während der Erntefahrt mittels eines Vorsatzgeräts 2 Pflanzen vom Feld abzuschneiden, um das geerntete Pflanzenmaterial über ein Einzugsaggregat 3 einem Häckselaggregat 4 zuzuführen. Dort wird das Erntegut auf für sich bekannte Weise zerkleinert und gelangt durch einen Förderschacht, der sich vom Häckselaggregat 4, das unterhalb einer Fahrerkabine 15 angeordnet ist, mit aufsteigendem Verlauf in einen Bereich hinter der Fahrerkabine 15 erstreckt, in eine Überladeeinrichtung 11. Im Förderschacht ist eine Konditioniereinrichtung 5 angeordnet. Ein Nachbeschleuniger 6 ist dieser Konditioniereinrichtung 5 in Bezug auf die Gutstromrichtung nachgeordnet. Der Nachbeschleuniger 6 umfasst - auf für sich bekannte Weise und daher nicht im einzelnen bezeichnet - eine mit einer Vielzahl von Schaufeln bestückte Nachbeschleunigertrommel, die drehantreibbar gelagert ist, um Erntegut, das durch den Förderschacht in den Wirkungsbereich der Schaufeln gelangt, in Gutstromrichtung durch einen von den Schaufeln erzeugten Luftstrom zu beschleunigen.

Die Überladeeinrichtung 11, auch als Auswurfkrümmer bezeichnet, ist um eine vertikale Drehachse 9 seitlich drehbar und um eine horizontale Drehachse 10 höhenverstellbar gegenüber dem Rahmen des Feldhäckslers 1 gelagert. Ein zwischen Rahmen und Überladeeinrichtung 11 wirkender Hubzylinder 8 dient zur Verstellung der Höhe der Überladeeinrichtung 11. Ein Höhensensor 20 in Form eines Drehpotentiometers erfasst den jeweiligen Höhenschwenkwinkel. Mittels eines antreibbaren Drehkranzes 7 lässt sich die Überladeeinrichtung 11 gegenüber dem Maschinenrahmen des Feldhäckslers 1 drehen. Ein Drehwinkelsensor 21 in Form eines Drehpotentiometers erfasst den jeweiligen Drehwinkel der Überladeeinrichtung 11.

Am maschinenabgewandten Ende der Überladeeinrichtung 11 ist eine Auswurfklappe 13 angeordnet, durch deren Verschwenkbarkeit sich der Auswurfwinkel des Ernteguts aus der Überladeeinrichtung 11 - und damit auch die erzielte Wurfweite - kurzfristig beeinflussen lässt. Die Verstellung wird durch einen hydraulischen Stellzylinder 14 bewirkt, wobei ein der Auswurfklappe 13 zugeordneter Winkelsensor 22, ebenfalls in Form eines Drehpotentiometers, die Klappenstellung erfasst.

Zur optischen Erfassung eines erreichten Auftreffpunkts ("P", vgl. weitere Fig.) des im Erntebetrieb ausgeworfenen Ernteguts sowie ggf. zur optischen Erfassung weiterer Merkmale wie der Lage, Form, Abmessung, eines Befüllzustands eines Ladebehälters etc. ist an der Überladeeinrichtung 11 eine auf einen Wurfzielbereich der Überladeeinrichtung 11 ausgerichtete Kamera 12 angebracht. Es handelt sich hierbei um eine Stereokamera, die unter anderem betreibbar ist, aus aufgenommenen Bildern den Abstand optisch erfasster Objekte zu ermitteln. Insbesondere eignet sich die Kamera 12 zur Ermittlung einer Wurfweite d (vgl. weitere Fig.) des durch die Überladeeinrichtung 11 ausgeworfenen Ernteguts. Alternativ oder ergänzend könnte an weiterer Stelle, beispielsweise in der Nähe des Wurfziels, ein optischer Sensor angeordnet sein.

In der Fahrerkabine 15, die Platz für einen Maschinenbediener bietet, ist eine Steuereinheit 16 angeordnet, die einen digitalen Signalprozessor umfasst. Der Steuereinheit 16 sind eine optische Anzeigeeinheit 17 zur Anzeige von Informationen (z.B. Wurfweite, Stellung der Überladeeinrichtung, Status der Steuerung etc.) an den Maschinenbediener und eine Bedieneinrichtung 18 zugeordnet. Neben der Betätigung der Stellorgane 7, 8 und/oder 14 ermöglicht die Bedieneinrichtung 18 dem Bediener, eine dabei gewünschte Verlagerungsgeschwindigkeit v_{P} für einen Auftreffpunkt P des Ernteguts vorzugeben. Zum Verständnis wird auf die nachfolgenden Fig. verwiesen.

Die Steuereinheit 16 ist über - aus Übersichtsgründen nicht dargestellte - Signalleitungen mit den Aktoren 7, 8, 14 der Überladeeinrichtung 11 und mit den Sensoren 20, 21, 22 sowie mit der Kamera 12 verbunden, um diese ansteuern zu können bzw. Signale von diesen zu empfangen. Für einen Fachmann versteht sich, dass auch andere bzw. ergänzende Aktoren und Sensoren im Rahmen der Erfindung zum Einsatz kommen können und diese dazu mit der Steuereinheit 16 in Signalverbindung stehen.

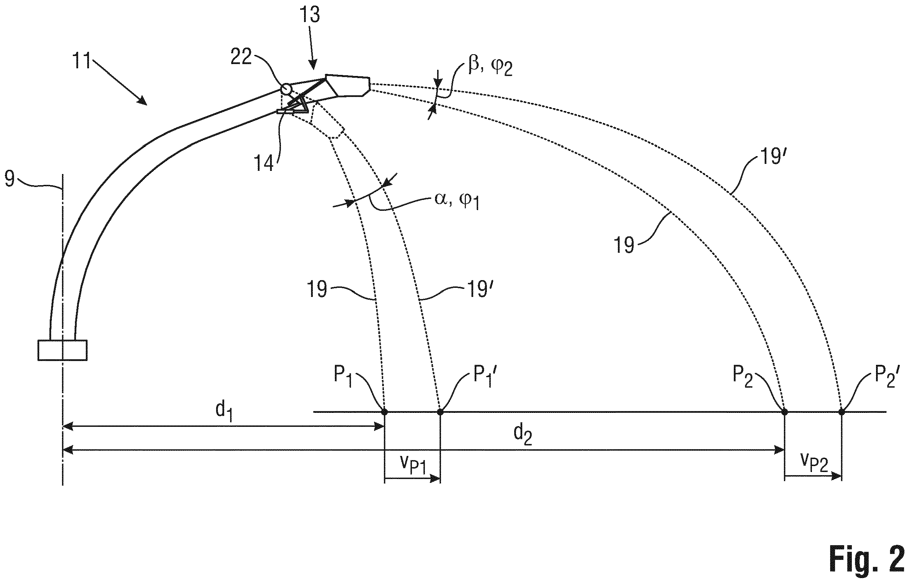

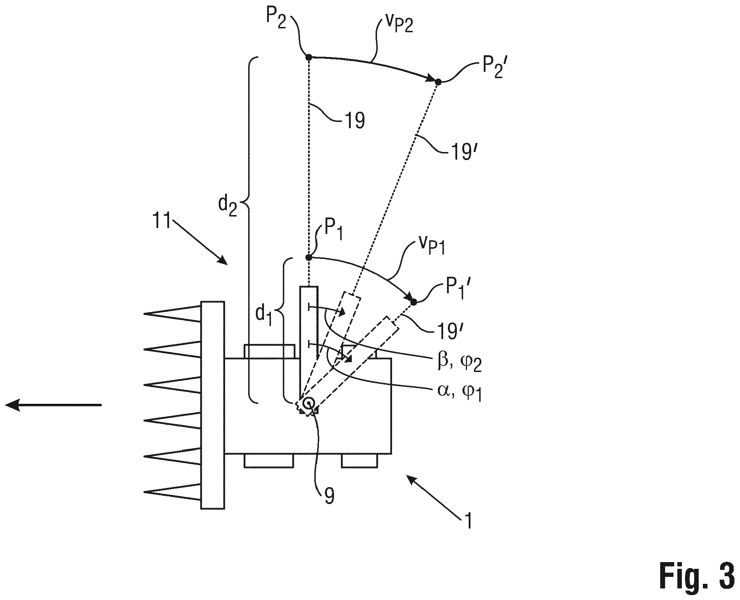

Anhand der nachfolgend erläuterten Fig. 2 und 3 werden vorteilhafte Anwendungsmöglichkeiten und Effekte des Steuerungssystems beschrieben, mit dem der Feldhäcksler 1 gemäß Fig. 1 ausgestattet ist.

Fig. 2 zeigt eine schematische Seitenansicht einer Überladeeinrichtung 11 beim Auswurf von Erntegut 19 in verschiedenen Situationen. Es handelt sich bei der Überladeeinrichtung 11 um eine an einen Feldhäcksler 1 gemäß Fig. 1 angebaute Überladeeinrichtung 11, die in Fig. 2 zur zeichnerisch einfacheren Darstellung der Erfindungseffekte ohne den Feldhäcksler 1 dargestellt ist. Fig. 2 zeigt den Auswurf von Erntegut 19 aus der Überladeeinrichtung 11 in grundsätzlich zwei Wurfsituationen.

Gemäß einer Wurfsituation im Nahbereich wird Erntegut 19 auf einen nahen Auftreffpunkt P₁ geworfen. Dabei wird eine Wurfweite d₁ erzielt, die dem Abstand zwischen der vertikalen Drehachse 9 der Überladeeinrichtung 11 (vgl. Fig. 1) und dem Auftreffpunkt P₁ entspricht. Die Auswurfklappe 13 ist zur Erzielung dieser Abwurfrichtung mittels des Stellzylinders 14 in eine nach unten gerichtete Stellung verschwenkt worden.

Gemäß einer Wurfsituation im Fernbereich wird Erntegut 19 auf einen fernen Auftreffpunkt P₂ geworfen. Dabei wird eine Wurfweite d₂ erzielt, die dem Abstand zwischen der vertikalen Drehachse 9 der Überladeeinrichtung 11 (vgl. Fig. 1) und dem Auftreffpunkt P₂ entspricht. Die Auswurfklappe 13 ist zur Erzielung dieser Abwurfrichtung mittels des Stellzylinders 14 in eine fast waagerechte Stellung verschwenkt worden.

Wird in einer der Wurfsituationen die Auswurfklappe 13 verstellt (hier: weiter geöffnet) - sei es manuell von einem Maschinenbediener mittels der Bedieneinrichtung 18 oder im Rahmen einer automatisiert ablaufenden Erntegutstrahl-Positionsregelung -, so sorgt die Steuereinheit 16 (vgl. Fig. 1) durch Anpassung der Stellgeschwindigkeit des Stellzylinders 14 dafür, dass sich der Auftreffpunkt P₁ bzw. P₂ in jedem der Fälle mit einer gleichen, konstanten Geschwindigkeit v_{P1} bzw. vₚ₂ verlagert (hier: vom Feldhäcksler entfernt).

Im Nahbereich wird dazu die Auswurfklappe 13 mit einer Verstellgeschwindigkeit ϕ₁ um einen Winkel α verstellt. Nach der Verstellung trifft das Erntegut 19' im Auftreffpunkt P₁' auf. Im Fernbereich wird dazu die Auswurfklappe 13 mit einer Verstellgeschwindigkeit ϕ₂ um einen Winkel β verstellt. Nach der Verstellung trifft das Erntegut 19' im Auftreffpunkt P₂' auf. Wie der Fig. 2 zu entnehmen, sind die Verstellgeschwindigkeit ϕ₁ bzw. der Winkel α im Nahbereich deutlich größer als die Verstellgeschwindigkeit ϕ₂ bzw. der Winkel β im Fernbereich. Demnach ist in erfindungsgemäßer Weise die Stellgeschwindigkeit ϕ der Auswurfklappe 13 der erzielten Wurfweite d des Ernteguts 19 angepasst worden.

Es ergibt sich der vorteilhafte Effekt, dass der erzielte Auftreffpunkt P₁ bzw. P₂ unabhängig von der jeweils erzielten Wurfweite d mit einer gleichen Geschwindigkeit vₚ₁ bzw. vₚ₂ verlagert wird. So lässt sich der Auftreffpunkt des Ernteguts auch im Fernbereich präzise lenken. Ein Übersteuern - sei es bei manuellem Betrieb oder im Rahmen einer automatischen Erntegutstrahl-Positionsregelung - wird wirksam vermieden. Für einen Bediener ist der Wechsel zwischen Nah- und Fernüberladung deutlich erleichtert. Zur Durchführung der Anpassung greift die Steuereinheit 16 jeweils auf die von der Kamera 12 ermittelte Wurfweite d des Ernteguts 19 zu, so dass eine dynamische Anpassung der Stellgeschwindigkeit ϕ des Klappenstellzylinders 14 an die Wurfweite d möglich ist. Die Geschwindigkeit des Stellzylinders 14 ist dazu kontinuierlich veränderlich. Die Darstellung in Fig. 2 (und auch Fig. 3) zeigt demzufolge nur vereinfachend eine Situation im Nahbereich und im Fernbereich.

Fig. 3 zeigt eine schematische Draufsicht eines Feldhäckslers 1 beim Auswurf von Erntegut 19 bei verschiedenen Drehstellungen der Überladeeinrichtung 11. Es handelt sich bei dem Feldhäcksler 1 um einen Feldhäcksler 1 gemäß Fig. 1. Dargestellt ist der Auswurf von Erntegut 19 aus der Überladeeinrichtung 11 in grundsätzlich zwei Wurfsituationen.

Gemäß einer Wurfsituation im Nahbereich wird das Erntegut 19 auf einen nahen Auftreffpunkt P₁ geworfen. Dabei wird eine Wurfweite d₁ erzielt, die dem Abstand zwischen der vertikalen Drehachse 9 der Überladeeinrichtung 11 und dem Auftreffpunkt P₁ entspricht. Die Auswurfklappe 13 (hier nicht dargestellt) ist zur Erzielung dieser kleinen Wurfweite d₁ in eine nach unten gerichtete Stellung verschwenkt worden.

Gemäß einer Wurfsituation im Fernbereich wird das Erntegut 19 auf einen fernen Auftreffpunkt P₂ geworfen. Dabei wird eine Wurfweite d₂ erzielt, die dem Abstand zwischen der vertikalen Drehachse 9 der Überladeeinrichtung 11 und dem Auftreffpunkt P₂ entspricht. Die Auswurfklappe 13 (hier nicht dargestellt) ist zur Erzielung dieser großen Wurfweite d₂ in eine fast waagerechte Stellung verschwenkt worden.

Wird die Überladeeinrichtung 11 - bei Betätigung des Drehkranzantriebs 7 (vgl. Fig. 1) - aus einer der Wurfsituationen verschwenkt (Drehung um die vertikale Achse 9) - sei es von einem Maschinenbediener mittels der Bedieneinrichtung 18 oder im Rahmen einer automatisiert ablaufenden Erntegutstrahl-Positionsregelung -, so ist sorgt die Steuereinheit 16 (vgl. Fig. 1) durch Anpassung der Geschwindigkeit des Drehkranzantriebs 7 dafür, dass sich der Auftreffpunkt P₁ bzw. P₂ in jedem der Fälle mit einer gleichen, konstanten Geschwindigkeit v_{P1} bzw. vₚ₂ verlagert (hier: im Uhrzeigersinn auf dem jeweiligen Kreisbogenabschnitt bewegt).

Im Nahbereich wird dazu der Drehkranz 7 mit einer Verstellgeschwindigkeit ϕ₁ um einen Winkel α verstellt. Nach der Verstellung trifft das Erntegut 19' im Auftreffpunkt P₁' auf. Im Fernbereich wird dazu der Drehkranz 7 mit einer Verstellgeschwindigkeit ϕ₂ um einen Winkel β verstellt. Nach der Verstellung trifft das Erntegut 19' im Auftreffpunkt P₂' auf. Wie der Fig. 3 zu entnehmen, sind die Verstellgeschwindigkeit ϕ₁ bzw. der Winkel α im Nahbereich deutlich größer als die Verstellgeschwindigkeit ϕ₂ bzw. der Winkel β im Fernbereich. Demnach ist in erfindungsgemäßer Weise die Stellgeschwindigkeit ϕ des Drehkranzes 7 der erzielten Wurfweite d des Ernteguts 19 angepasst worden.

Es ergibt sich der vorteilhafte Effekt, dass der erzielte Auftreffpunkt P₁ bzw. P₂ unabhängig von der jeweils erzielten Wurfweite d mit einer gleichen Geschwindigkeit vₚ₁ bzw. vₚ₂ verlagert wird. So lässt sich der Auftreffpunkt des Ernteguts auch im Fernbereich präzise lenken. Ein Übersteuern - sei es bei manuellem Betrieb oder im Rahmen einer automatischen Erntegutstrahl-Positionsregelung - kann vermieden werden. Für einen Bediener ist der Wechsel zwischen Nah- und Fernüberladung deutlich erleichtert. Zur Durchführung der Anpassung greift die Steuereinheit 16 jeweils auf die von der Kamera 12 ermittelte Wurfweite d des Ernteguts 19 zu, so dass eine dynamische Anpassung der Stellgeschwindigkeit ϕ des Drehkranzantriebs 7 möglich ist.

Die erfindungsgemäße Wirkung einer Verstellgeschwindigkeitsanpassung ist gemäß den Fig. 2 und 3 am Beispiel der Auswurfklappen- bzw. Drehkranzbetätigung erläutert worden. Für einen Fachmann versteht sich, dass vergleichbare Effekte auch für andere Stellorgane einer Überladeeinrichtung erzielbar sind, welche die Auswurfrichtung des Ernteguts beeinflussen. Dazu kann insbesondere der Hubzylinder 8 der Überladeeinrichtung 11 gemäß Fig. 1 zählen, da auch durch die Höhenverstellung der Überladeeinrichtung 11 die Richtung des austretenden Ernteguts beeinflusst wird.

**Bezugszeichenliste**

| | | | |
|---|---|---|---|
| 1 | Feldhäcksler | P₁ | Auftreffpunkt im Nahbereich |
| 2 | Vorsatzgerät | P₂ | Auftreffpunkt im Fernbereich |
| 3 | Einzugsaggregat | P₁' | verlagerter Auftreffpunkt (Nahbereich) |
| 4 | Häckselaggregat | P₂' | verlagerter Auftreffpunkt (Fernbereich) |
| 5 | Konditioniereinrichtung | d₁ | Wurfweite (nah) |
| 6 | Nachbeschleuniger | d₂ | Wurfweite (fern) |
| 7 | Drehkranz | v_{P1} | Geschwindigkeit des Auftreffpunkts P₁ |
| 8 | Hubzylinder | v_{P1} | Geschwindigkeit des Auftreffpunkts P₂ |
| 9 | vertikale Drehachse | α | Verstellwinkel |
| 10 | horizontale Drehachse | β | Verstellwinkel |
| 11 | Überladeeinrichtung | ϕ₁ | Verstellgeschwindigkeit |
| 12 | Kamera | ϕ₂ | Verstellgeschwindigkeit |
| 13 | Auswurfklappe | | |
| 14 | Stellzylinder | | |
| 15 | Fahrerkabine | | |
| 16 | Steuereinheit | | |
| 17 | Anzeigeeinheit | | |
| 18 | Bedieneinrichtung | | |
| 19 | Erntegut(-strahl) | | |
| 19' | verlagerter Erntegutstrahl | | |
| 20 | Höhensensor | | |
| 21 | Drehwinkelsensor | | |
| 22 | Klappenwinkelsensor | | |

## Patentansprüche

1. System zur Steuerung einer Überladeeinrichtung (11) einer landwirtschaftlichen Erntemaschine (1), wobei aus der Überladeeinrichtung (11) unter Erzielung einer Wurfweite (d) Erntegut (19) ausgeworfen wird und der Überladeeinrichtung (11) zumindest ein Stellorgan (7, 8, 13) zur Verstellung einer Auswurfrichtung des Ernteguts (19) zugeordnet ist, mit Mitteln (12, 16, 18) zur Veränderung der Stellgeschwindigkeit (ϕ) des Stellorgans (7, 8, 13) **dadurch gekennzeichnet, dass** die Stellgeschwindigkeit in Abhängigkeit der erzielten Wurfweite (d) veränderbar ist.

2. System nach Anspruch 1, **dadurch gekennzeichnet, dass** die Mittel (12, 16, 18) eine Einrichtung (12) zur Erfassung der erzielten Wurfweite (d) sowie eine damit gekoppelte Steuereinheit (16) umfassen, wobei die Steuereinheit (16) betreibbar ist, die Geschwindigkeit (ϕ) des Stellorgans (7, 8, 13) in Abhängigkeit der erfassten Wurfweite (d) zu verändern.

3. System nach Anspruch 2, **dadurch gekennzeichnet, dass** die Einrichtung betreibbar ist, die erzielte Wurfweite (d) anhand von Maschinenparametern der Erntemaschine (1) zu ermitteln.

4. System nach Anspruch 2 oder 3, **dadurch gekennzeichnet, dass** die Einrichtung zur Erfassung der Wurfweite (d) zumindest einen optischen Sensor (12) aufweist, der zur Erfassung eines Auftreffpunkts (P) des Ernteguts (19) dient.

5. System nach einem der Ansprüche 2 bis 4, **dadurch gekennzeichnet, dass** die Steuereinheit (16) betreibbar ist, die Geschwindigkeit (ϕ) des Stellorgans (7, 8, 13) mit zunehmender Wurfweite (d) zu verringern und mit abnehmender Wurfweite (d) zu erhöhen.

6. System nach einem der vorigen Ansprüche, **dadurch gekennzeichnet, dass** dem Stellorgan (7, 8, 14) ein Aktor (7, 8, 14) mit kontinuierlich veränderbarer Verstellgeschwindigkeit (ϕ) zugeordnet ist.

7. System nach einem der Ansprüche 2 bis 6, **dadurch gekennzeichnet, dass** die Steuereinheit (16) betreibbar ist, die Geschwindigkeit (ϕ) des Stellorgans (7, 8, 14) so anzupassen, dass sich durch Betätigung des Stellorgans (7, 8, 14) ein Auftreffpunkt (P) des Ernteguts (19) mit gleichbleibender Geschwindigkeit (vₚ) verlagern lässt.

8. System nach Anspruch 7, **dadurch gekennzeichnet, dass** der Steuereinheit (16) eine Bedieneinrichtung (18) zugeordnet ist, mittels welcher die Geschwindigkeit (vₚ) für die Verlagerung des Auftreffpunkts (P) vorgebbar ist.

9. System nach einem der vorigen Ansprüche, **dadurch gekennzeichnet, dass** es sich bei dem zumindest einen Stellorgan um eine mittels eines Aktors (14) bewegliche Auswurfklappe (13) handelt, mittels welcher sich ein Auswurfwinkel des austretenden Ernteguts (19) gegenüber der Horizontalebene beeinflussen lässt.

10. System nach einem der vorigen Ansprüche, **dadurch gekennzeichnet, dass** die Überladeeinrichtung (11) um eine vertikale Achse (9) und/oder um eine horizontale Achse (10) schwenkbar gegenüber einem Rahmen der Erntemaschine (1) gelagert ist, wobei zur jeweiligen Verschwenkung der Überladeeinrichtung (11) ein Aktor (7, 8) dient.

11. System nach einem der vorigen Ansprüche, **dadurch gekennzeichnet, dass** das Stellorgan (7, 8, 13) mittels einer Bedieneinrichtung (18) manuell betätigbar ist.

12. System nach einem der vorigen Ansprüche, **dadurch gekennzeichnet, dass** das Stellorgan (7, 8, 13) im Rahmen einer automatisiert ablaufenden Erntegutstrahl-Positionierungsregelung betätigbar ist.

13. System nach einem der vorigen Ansprüche, **dadurch gekennzeichnet, dass** es sich bei der Erntemaschine um einen selbstfahrenden Feldhäcksler (1) handelt.

## Claims

1. A system for controlling a transloading device (11) of an agricultural harvester (1), wherein crop material (19) is ejected from the transloading device (11) achieving a throwing distance (d) and at least one actuating member (7, 8, 13) is associated with the transloading device (11) for adjusting an ejection direction of the crop material (19), comprising means (12, 16, 18) for changing the actuating speed (ϕ) of the actuating member (7, 8, 13), **characterised in that** the actuating speed can be changed in dependence on the throwing distance (d) achieved.

2. A system according to claim 1 **characterised in that** the means (12, 16, 18) include a device (12) for detecting the throwing distance (d) achieved and a control unit (16) coupled thereto, wherein the control unit (16) is operable to change the speed (ϕ) of the actuating member (7, 8, 13) in dependence on the throwing distance (d) detected.

3. A system according to claim 2 **characterised in that** the device is operable to ascertain the throwing distance (d) achieved on the basis of machine parameters of the harvester (1).

4. A system according to claim 2 or claim 3 **characterised in that** the device for detecting the throwing distance (d) has at least one optical sensor (12) serving to detect an impact point (P) of the crop material (19).

5. A system according to one of claims 2 to 4 **characterised in that** the control unit (16) is operable to reduce the speed (ϕ) of the actuating member (7, 8, 13) with increasing throwing distance (d) and to increase same with decreasing throwing distance (d).

6. A system according to one of the preceding claims **characterised in that** an actuator (7, 8, 14) with a continuously variable adjusting speed (ϕ) is associated with the actuating member (7, 8, 14).

7. A system according to one of claims 2 to 6 **characterised in that** the control unit (16) is operable to so adapt the speed (ϕ) of the actuating member (7, 8, 14) that an impact point (P) of the crop material (19) can be displaced with the speed (dₚ) remaining the same by actuation of the actuating member (7, 8, 14).

8. A system according to claim 7 **characterised in that** associated with the control unit (16) is an operating device (18), by means of which the speed (vₚ) for displacement of the impact point (P) can be predetermined.

9. A system according to one of the preceding claims **characterised in that** the at least one actuating member is an ejection flap (13) which is moveable by means of an actuator (14) and by means of which an ejection angle of the issuing crop material (19) with respect to the horizontal plane can be influenced.

10. A system according to one of the preceding claims **characterised in that** the transloading device (11) is mounted pivotably relative to a frame of the harvester (1) about a vertical axis (9) and/or about a horizontal axis (10), wherein an actuator (7, 8) serves for the respective pivotal movement of the transloading device (11).

11. A system according to one of the preceding claims **characterised in that** the actuating member (7, 8, 13) is manually actuable by means of an operating device (18).

12. A system according to one of the preceding claims **characterised in that** the actuating member (7, 8, 13) is actuable in the context of a crop material jet position regulation which takes place in automated fashion.

13. A system according to one of the preceding claims **characterised in that** the harvester is a self-propelled forage harvester (1).

## Revendications

1. Système de commande d'un dispositif de déchargement (11) d'une machine agricole de récolte (1), du produit récolté (19) étant projeté à partir du dispositif de déchargement (11) en atteignant une portée de projection (d), et au moins un organe de réglage (7, 8, 13) étant associé au dispositif de déchargement (11) pour régler la direction d'éjection du produit récolté (19), comprenant des moyens (12, 16, 18) pour modifier la vitesse de réglage (ϕ) de l'organe de réglage (7, 8, 13), **caractérisé en ce que** la vitesse de réglage est modifiable en fonction de la portée de projection atteinte (d).

2. Système selon la revendication 1, **caractérisé en ce que** les moyens (12, 16, 18) comprennent un dispositif (12) pour détecter la portée de projection atteinte (d) ainsi qu'une unité de commande (16) couplée à celui-ci, l'unité de commande (16) était exploitable pour modifier la vitesse (ϕ) de l'organe de réglage (7, 8, 13) en fonction de la portée de projection détectée (d).

3. Système selon la revendication 2, **caractérisé en ce que** le dispositif est exploitable pour déterminer la portée de projection atteinte (d) à l'aide de paramètres de machine de la machine de récolte (1).

4. Système selon la revendication 2 ou 3, **caractérisé en ce que** le dispositif de détection de la portée de projection (d) comporte au moins un capteur optique (12) qui sert à détecter le point d'impact (P) du produit récolté (19).

5. Système selon une des revendications 2 à 4, **caractérisé en ce que** l'unité de commande (16) est exploitable pour réduire la vitesse (ϕ) de l'organe de réglage (7, 8, 13) à mesure que la portée de projection (d) augmente et pour l'augmenter à mesure que la portée de projection (d) diminue.

6. Système selon une des revendications précédentes, **caractérisé en ce qu'**à l'organe de réglage (7, 8, 14) est associé un actionneur (7, 8, 14) à vitesse de réglage (ϕ) variable en continu.

7. Système selon une des revendications 2 à 6, **caractérisé en ce que** l'unité de commande (16) est exploitable pour adapter la vitesse (ϕ) de l'organe de réglage (7, 8, 14) de façon à pouvoir déplacer un point d'impact (P) du produit récolté (19) à vitesse constante (vₚ) en actionnant l'organe de réglage (7, 8, 14).

8. Système selon la revendication 7, **caractérisé en ce qu'**à l'unité de commande (16) est associé un dispositif d'utilisation (18) au moyen duquel la vitesse (vₚ) de déplacement du point d'impact (P) peut être prescrite.

9. Système selon une des revendications précédentes, **caractérisé en ce que** le au moins un organe de réglage est constitué par une casquette d'éjection (13) qui est déplaçable au moyen d'un actionneur (14) et qui permet d'influer sur un angle d'éjection du produit récolté sortant (19) par rapport au plan horizontal.

10. Système selon une des revendications précédentes, **caractérisé en ce que** le dispositif de déchargement (11) est monté pivotant autour d'un axe vertical (9) et/ou autour d'un axe horizontal (10) par rapport à un châssis de la machine de récolte (1), un actionneur (7, 8) servant au pivotement correspondant du dispositif de déchargement (11).

11. Système selon une des revendications précédentes, **caractérisé en ce que** l'organe de réglage (7, 8, 13) est actionnable manuellement au moyen d'un dispositif d'utilisation (18).

12. Système selon une des revendications précédentes, **caractérisé en ce que** l'organe de réglage (7, 8, 13) est actionnable dans le cadre d'une régulation à déroulement automatisé du positionnement du flux de récolte.

13. Système selon une des revendications précédentes, **caractérisé en ce que** la machine de récolte est constituée par une ensileuse automotrice (1).
